# EUROPÄISCHE PATENTSCHRIFT

(11) **EP 3 692 231 B1**
(45) Veröffentlichungstag und Bekanntmachung des Hinweises auf die Patenterteilung: **18.03.2026**
(21) Anmeldenummer: 18773362.1
(22) Anmeldetag: 11.09.2018
(51) Int. Cl.: E05D 11/06, E05F 1/12

(54) **SCHARNIER MIT SPANNBAREM FEDERELEMENT**
HINGE HAVING A TENSIONABLE SPRING ELEMENT
CHARNIÈRE COMPORTANT UN ÉLÉMENT RESSORT POUVANT ÊTRE MIS EN TENSION

(30) Priorität: 06.10.2017 DE 202017106060 U
(43) Veröffentlichungstag der Anmeldung: 12.08.2020
(73) Patentinhaber: Schwarz GmbH, 75382 Althengstett (DE)
(72) Erfinder: HOMNER, Bernhard, 75365 Calw-Stammheim (DE)
(74) Vertreter: patcare Patentanwälte Partnerschaft mbB
(86) Internationale Anmeldenummer: PCT/EP2018/074441
(87) Internationale Veröffentlichungsnummer: WO 2019/068432

(56) Entgegenhaltungen:
- EP-A2- 2 711 493
- US-A- 2 516 935

## Beschreibung

Die Erfindung betrifft ein Scharnier mit einem spannbaren Federelement nach dem Oberbegriff des Patentanspruches 1.

Herkömmliche Gepäckablagefächer von Flugzeugen sind meist mit Scharnieren ausgestattet, deren Federspannung die selbsttätig federkraftbeeinflusste Öffnung der Verschlussklappe bestimmt, so dass sich die Klappe selbststätig aus einer geschlossenen Position in eine völlig geöffnete Position bewegt.

Gepäckablagefächer sind dabei mit Gasfedern ausgestattet, die das Öffnen der Klappen erleichtern und das Halten der Klappen in offener Stellung ermöglichen. Gasfedern sind jedoch anfällig auf tiefe Temperaturen. So kann es bei einem stark abgekühlten Flugzeug zu Schwierigkeiten beim Öffnen der Ablagefächer führen. Darüber hinaus sind die Federn des Scharniers im Gepäckablagefach angeordnet, wobei sie leicht beschädigt werden können und sie den nutzbaren Stauraum vermindern.

Die EP 0 894 933 B1 beschreibt ein Scharnier, das ein schwenkbares und ein feststehendes Scharnierteil mit einer gemeinsamen Hohlzylinder-ähnlichen Scharnierachse umfasst, die fest mit dem schwenkbaren Scharnierteil verbunden ist und drehbar in einem Achslager gelagert ist. Der Achslagerkörper ist starr mit dem feststehenden Scharnierteil verbunden. In der Scharnierachse ist eine Torsions-Spiralfeder angeordnet, die an beiden Enden fest verankert ist. Die Spannung der Feder ist mittels Verstellen eines der beiden fest verankerten Enden einstellbar. Die belastete Feder erleichtert das Öffnen der Klappe und eine Dämpfungsvorrichtung gewährleistet den verzögerten Öffnungsbewegungsablauf der Klappe.

Darüber hinaus offenbart die EP 2 405 090 B1 eine Anordnung mit der die Spannung einer Torsions-Spiralfeder eines solchen Scharniers einfach und ohne erneute Montage der Feder im Scharnier einstellbar ist.

Aus der US 2 516 935 A ist ein Scharnier mit einem schwenkbaren Scharnierteil, einem feststehenden Scharnierteil sowie einem spannbaren Federelement bekannt. Das feststehende Scharnierteil ist mit einem ersten Lager sowie einem zweiten Lager ausgebildet. Die Lager weisen zueinander versetzte Schwenkachsen auf. Das schwenkbare Scharnierteil ist über das erste Lager am feststehenden Scharnierteil um eine Schwenkachse schwenkbar gelagert. Das spannbare Federelement ist über das zweite Lager am feststehenden Scharnierteil angeordnet. Das spannbare Federelement ist als eine Spiralfeder ausgebildet. Die Spiralfeder ist gemeinsam mit einem als Treibrad ausgebildeten Bauteil am zweiten Lager angeordnet. Das Treibrad ist in einem Bereich als Zahnrad ausgebildet und am zweiten Lager gelagert. Das eine Ende der Spiralfeder ist im Treibrad gesichert. Das am ersten Lager angeordnete schwenkbare Scharnierteil ist als Lagerbuchse mit Verzahnungen ausgebildet, die mit einem Lagerzapfen am ersten Lager verbundenen ist. Die Verzahnungen greifen formschlüssig in den als Zahnrad ausgebildeten Bereich des Treibrads.

Aus der EP 2 711 493 A2 ist ein Bewegungsmechanismus für ein Deckel in einem Fahrzeug bekannt. Ein über eine Justierschraube einstellbares Einstellelement für das Antriebselement wird offenbart.

Ein bekanntes Problem der Gepäckablagefächer von Flugzeugen ist, dass die einseitig oder beidseitig angeordneten Scharniere einen nicht unerheblichen Teil des vorhandenen Volumens des Gepäckablagefachs einnehmen, wodurch der beladbare Stauraum sich reduziert. Die Scharniere, insbesondere die Federn, können durch Ladegut beschädigt werden, wenn nicht Abdeckungen montiert werden, die wiederum Platz benötigen und die Montage und Wartung erschweren. Die Anordnung und die Dimensionen gattungsbildender Scharniere verhindern die Integration der Scharniere in die schmalen, vertikalen Seitenwände zwischen den Gepäckablageboxen.

Der Erfindung liegt die Aufgabe zu Grunde, ein Scharnier gemäß der im Oberbegriff des Patentanspruches 1 angegebenen Art derart weiterzubilden, dass das Scharnier eine sehr kompakte und bauraumsparende Einheit bildet.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Erfindungsgemäß ist die Spiralfeder als Flach-Spiralfeder ausgebildet. Das radial äußere Ende der Spiralfeder ist mit dem Treibrad verbunden. Eine Drehmomentverstellung ist am radial inneren Ende der Spiralfeder mit dieser verbunden. Die Drehmomentverstellung weist einen verzahnten Bereich auf in den eine Einstellschraube eingreift. Mit Hilfe der Position der Verzahnungen der Lagerbuchse auf dem Zahnrad des Treibrads und durch Drehen einer Einstellschraube der Drehmomentverstellung ist die Spiralfeder auf das benötigte Drehmoment vorspannbar.

Das feststehende Scharnierteil ist somit mit zwei Lagern ausgebildet, deren jeweilige Achsen beabstandet sind, wobei das am ersten Lager gelagerte schwenkbare Scharnierteil mittels eines am zweiten Lager angeordneten spannbaren Federelements antreibbar ist. Die beiden Lager sind unabhängig voneinander ausgebildet und, insbesondere in der gleichen Ebene, versetzt zueinander positioniert. Die Schwenkachsen der Lager sind somit nicht konzentrisch.

Die Flach-Spiralfeder kann mit archimedischen Windungen ausgebildet sein. Ausgehend vom radial inneren Ende der Feder verlaufen die Windungen spiralförmig in einer Ebene, wobei das radial innere Ende sowie das radial äußere Ende der Flach-Spiralfeder abgebogen und einspannbar sind.

Das schwenkbare Scharnierteil ist zu einer Lagerbuchse ausgebildet. Es ist denkbar, dass das schwenkbare Scharnierteil als ein Scharnierblatt mit einem Scharnierarm ausgebildet ist, wobei dann das vom Scharnierblatt entfernt gelegene Ende zu einer Lagerbuchse ausgebildet ist, die am ersten Lager des feststehenden Scharnierteils angeordnet ist. Am ersten Lager des feststehenden Scharnierteils ist ein Gleitzapfen ausgebildet, so dass das schwenkbare Scharnierteil und das feststehende Scharnierteil formschlüssig mittels eines Gleitlagers verbindbar sind.

Die Achse des ersten Lagers definiert die Öffnungsbewegung der Klappe. Es ist denkbar, dass ein Dämpfer an der Scharnierachse angeordnet ist. Der Dämpfer ermöglicht in vorteilhafter Weise die kontrollierte, sicherheitsbedingt sanfte und nicht zu schnell erfolgende hochschwenkende Bewegung des schwenkbaren Scharnierteils. Bevorzugt ist der Dämpfer formschlüssig in der Lagerbuchse des schwenkbaren Scharnierteils gelagert. Das hat den Vorteil, dass er bauraumsparend gelagert ist, wodurch ein schmales Scharnier gewährleistet ist.

Ein Bereich der Lagerbuchse des schwenkbaren Scharnierteils ist mit Verzahnungen ausgebildet. Dies ermöglicht, dass eine Kraft auf das schwenkbaren Scharnierteil übertragbar ist.

Am zweiten Lager des feststehenden Scharnierteils ist sowohl das spannbare Federelement als auch ein Bauteil, das Verzahnungen aufweist, angeordnet. Das spannbare Federelement ist mit dem verzahnten Bauteil verbindbar, wobei sich das Drehmoment des verankerbaren, spannbaren Federelements auf das verzahnte Bauteil überträgt.

Das an jeweils unterschiedlichen Lagern angeordnete spannbare Federelement und das schwenkbare Scharnierteil sind mittels einer mechanischen Kraftübertragung miteinander verbunden, die es ermöglicht das Drehmoment des Federelements auf das schwenkbare Scharnierteil zu übertragen. Die Drehmomentübertragung erfolgt erfindungsgemäß mittels eines Zahnradantriebs.

Die Verzahnungen der Lagerbuchse und die Verzahnungen des am zweiten Lager angeordneten Bauteils sind derart angeordnet, dass sie formschlüssig und schlupffrei ineinandergreifen. Somit wird die indirekte Drehmomentübertragung vom Federelement auf das schwenkbare Scharnierteil gewährleistet.

Das spannbare Federelement steht in Wirkverbindung mit einer Drehmomentverstellung. Die Drehmomentverstellung ist derart ausgebildet, dass sie formschlüssig am zweiten Lager gelagert ist, wobei ein Ende des Federelements mit der Drehmomentverstellung verbindbar ist. Eine Einstellschraube ist an einem verzahnten Bereich der Drehmomentverstellung angeordnet. Die Einstellschraube greift mit ihrer Welle mehrfach gleichzeitig in die verzahnte Drehmomentverstellung, wobei eine Drehbewegung der Einstellschraube eine Relativbewegung der Drehmomentverstellung bewirkt. Das Federelement lässt sich durch Drehen der Drehmomentverstellung und mit Hilfe der Position der ineinandergreifenden Verzahnungen der Lagerbuchse und des am zweiten Lager angeordneten Bauteils vorspannen. Die Einstellschraube gewährleistet die Sicherung der vorgespannten Einstellung.

Vorzugsweise ist am feststehenden Scharnierteil ein Anschlag für das schwenkbaren Scharnierteil ausgebildet. Es ist denkbar, dass der Anschlag eine Schraube umfasst, und dass der Aufschlag des schwenkbaren Scharnierteils mittels einer an der Schraube angeordneten Feder gedämpft ist. Die Schraube ermöglicht die Feineinstellung der geöffneten Position des Scharniers.

Eine bevorzugte Ausführungsform sieht vor, dass das feste Scharnierteil als Gehäuse ausgebildet ist, in dem das Scharnier angeordnet ist. Hierdurch ist die Mechanik des Scharniers in vorteilhafter Weise vor Beschädigungen und Verschmutzungen geschützt. Es ist denkbar, dass das Gehäuse aus Kunststoff angefertigt ist, wobei es ein geringes Gewicht aufweist und dennoch sehr belastbar ist. Kunststoffteile sind mit großer Funktionalität herstellbar. So kann das Gehäuse beispielsweise mit einem Deckel ausgebildet sein, der formschlüssig, kraftschlüssig oder stoffschlüssig mit dem Gehäuse verbunden ist.

Vorzugsweise sind alle einzelnen Teile der gesamten Mechanik des Scharniers im Gehäuse angeordnet. Das Gehäuse hält die einzelnen Teile zusammen. Es kann beispielsweise Ausprägungen wie Aussparungen, Wandungen und / oder Halterungen aufweisen, die die Teile des Scharniers zusammenhalten, führen und / oder sichern. Es ist denkbar, dass das Gehäuse Öffnungen aufweist, durch welche die Einstellschraube und die Anschlagschraube verstellbar sind.

Gemäß der Erfindung sind das erste Lager und das zweite Lager im Hinblick auf die Schwenkachsen versetzt zueinander angeordnet sind. Vorzugsweise sind die Schwenkachsen der beiden Lager dabei parallel ausgerichtet.

Insbesondere ist das schwenkbare Scharnierteil gegen den Uhrzeigersinn belastet, wenn die die Flach-Spiralfeder im Uhrzeigersinn auf das Treibrad wirkt.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht des erfindungsgemäßen Scharniers in geschlossener und geöffneter Position;
- Fig. 2: eine perspektivische Ansicht auf die Mechanik eines Scharniers gemäß dem Stand der Technik;
- Fig. 3: eine Explosionsansicht der einzelnen Teile des Scharniers von Fig. 2;
- Fig. 4: eine Detailansicht des spannbaren Federelements und der Kraftübertragung auf den schwenkbaren Scharnierteil von Fig. 2;
- Fig. 5: eine Ansicht des offenen Gehäuses von Fig. 2;
- Fig. 6: eine Draufsicht der Mechanik des erfindungsgemäßen Scharniers mit eine Flach-Spiralfeder; und
- Fig. 7: eine Explosionsansicht des erfindungsgemäßen Scharniers mit einer Flach-Spiralfeder von Fig. 6.

Das Scharnier 10 umfasst ein schwenkbares Scharnierteil 12 und ein feststehendes Scharnierteil 14, der mit zwei Lagern 16, 18 ausgebildet ist.

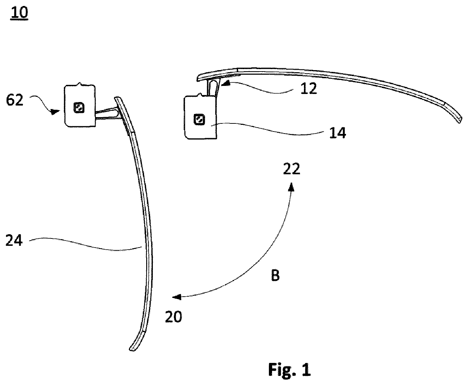

Wie in Fig. 1 dargestellt ist, bewegt sich das Scharnier 10 selbsttätig mittels Federspannung von einer geschlossenen Position 20 in eine geöffnete Position 22.

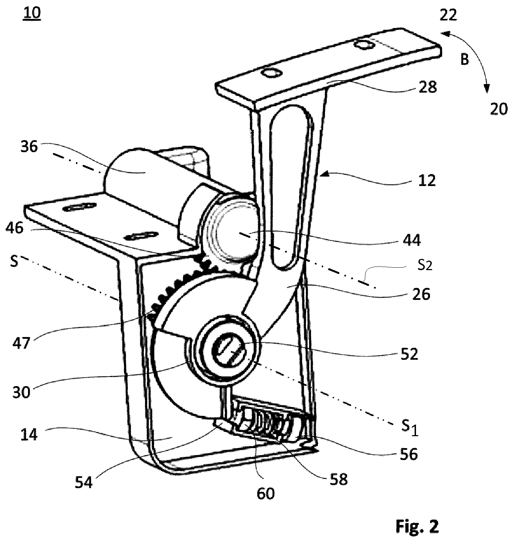

Gemäß der in Fig. 2 bis Fig. 5 dargestellten ersten Ausführungsform nach dem Stand der Technik ist das Scharnier 10 derart ausgebildet, dass es ein erstes Lager 16 und ein zweites Lager 18 am feststehenden Scharnierteil 14 aufweist. Das schwenkbare Scharnierteil 12 ist über das erste Lager 16 um eine Schwenkachse S₁ schwenkbar gelagert. Die Schwenkachse S₁ definiert die Öffnungsbewegung B der Klappe 24. Vorliegend ist das schwenkbare Teil 12 als ein Scharnierarm 26 mit einem Scharnierblatt 28, das mit der Klappe 24 verbindbar ist, ausgebildet. Vorzugsweise weist der Scharnierarm 26 auf dem vom Scharnierblatt 28 abgewendeten Ende eine Lagerbuchse 30 auf, die formschlüssig mit einem am ersten Lager 16 ausgebildeten Lagerzapfen 32 verbunden ist. Somit sind das schwenkbare Scharnierteil 12 und das feststehende Scharnierteil 14 mittels eines Gleitlagers verbunden. Das feststehende Scharnierteil 14 ist am zweiten Lager 18 zu einem Hohlzylinder 36 ausgebildet in dem ein Achsrohr 38 angeordnet ist. Das zweite Lager 18 dreht sich um die Schwenkachse S₂, welche beabstandet und versetzt zu der Schwenkachse S₁ des ersten Lagers 16 angeordnet ist.

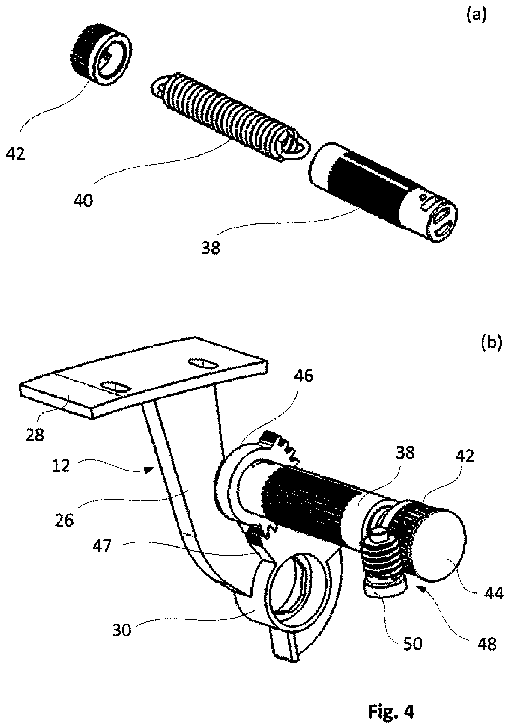

Wie in Fig. 4 dargestellt, ist das spannbare Federelement 34 vorliegend als Torsions-Spiralfeder 40 ausgebildet. Die Windungen der Torsions-Spiralfeder 40 sind als zylindrische Spirale angeordnet und die Federenden sind schenkelförmig abgebogen. Somit sind die einfache Befestigung und die Spannung der Torsions-Spiralfeder 40 ermöglicht. Die Torsions-Spiralfeder 40 ist innerhalb des Achsrohrs 38 angeordnet. An dem vom feststehenden Scharnierteil 14 entfernt liegenden Ende ist eine Drehmomentverstellung 42 mit der Torsions-Spiralfeder 40 und dem Achsrohr 38 formschlüssig verbindbar. Ein Stift durchsetzt das Federende und sichert die Verbindung der Torsions-Spiralfeder 40 mit dem Achsrohr 38 und der Drehmomentverstellung 42. Die Drehmomentverstellung 42 ist mit einem Deckel 44 verschließbar. Am zweiten Lager 18 ist ein als Zahnrad ausgebildetes Bauteil 46 angeordnet. Es ist formschlüssig mit dem Achsrohr 38 verbindbar. Die im Achsrohr 38 angeordnete spannbare Torsions-Spiralfeder 40 ist mit einem Federende im Bauteil 46 mittels eines Stiftes verankert. Somit sind die jeweiligen Federenden der Torsions-Spiralfeder 40 in unterschiedlichen Bauteilen verankert. Das benötigte Drehmoment der Torsions-Spiralfeder 40 ist vorliegend mittels eines sogenannten Schneckengetriebes 48 einstellbar. Das Schneckengetriebe 48 umfasst die als ein Schneckenrad ausgebildete Drehmomentverstellung 42 und eine Einstellschraube 50. Die Achse der Einstellschraube 50 und die Achse der Drehmomentverstellung 42 sind um 90° versetzt, wobei die Welle der Einstellschraube 50 in die verzahnte Drehmomentverstellung 42 greift. Bei einer Drehbewegung der Einstellschraube 50 dreht sich funktionsbedingt die Drehmomentverstellung 42, wobei sich die Torsions-Spiralfeder 40 auch dreht und somit spannen lässt.

Das Drehmoment der Torsions-Spiralfeder 40 überträgt sich indirekt auf das schwenkbaren Scharnierteil 12 mittels einer Kraftübertragung, die vorliegend als Zahnradantrieb ausgebildet ist. Das am zweiten Lager 18 angeordnete verzahnte Bauteil 46 greift formschlüssig und schlupffrei in die Verzahnungen 47 der Lagerbuchse 30 und ermöglicht somit die selbsttätige, federkraftbeeinflusste Öffnung des Scharniers 10. Die Torsions-Spiralfeder 40 ist auf das benötigte Drehmoment vorspannbar. Die Vorspannung wird mit Hilfe der Position der Verzahnungen 47 der Lagerbuchse 30 auf dem Zahnrad des am zweiten Lager 18 angeordneten Bauteils 46 und durch Drehen der Drehmomentverstellung 42 mittels der Einstellschraube 50 ermöglicht. Ein Dämpfer 52 ist formschlüssig am schwenkbaren Scharnierteil 12 gelagert und ermöglicht die kontrollierte Öffnungsbewegung B des schwenkbaren Scharnierteils 12, so dass das Hochschwenken der Klappe 24 sanft und nicht zu schnell erfolgt.

Wie insbesondere aus Fig. 2 hervorgeht, ist am feststehenden Scharnierteil 14 ein Anschlag 54 für das schwenkbare Scharnierteil 12 vorgesehen. Der Anschlag 54 umfasst eine Anschlagschraube 56 an der eine dämpfende Feder 58 angeordnet ist. Die Anschlagschraube 56 ermöglicht die Feineinstellung der geöffneten Position 22 des Scharniers 10. Bevorzugt ist oberhalb der Feder 58 eine Mutter 60 formschlüssig angeordnet, die das Verdrehen der Anschlagschraube 56 verhindert.

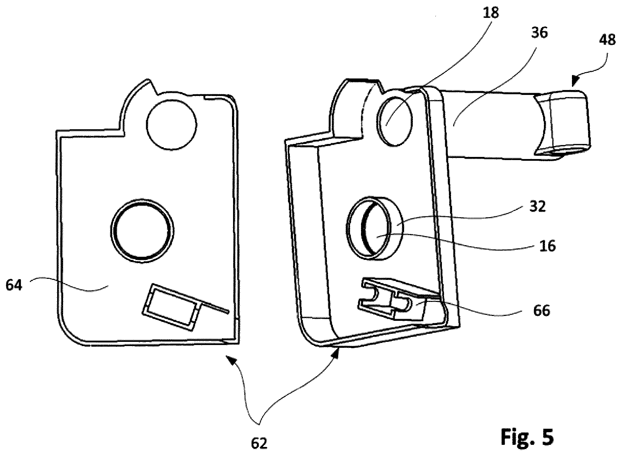

Gemäß der in Fig. 5 dargestellten Ausführungsform ist das feststehende Scharnierteil 14 als Gehäuse 62 mit einem Deckel 64 ausgebildet. Das Gehäuse 62 schützt die Mechanik des Scharniers 10 vor Beschädigungen, hält die einzelnen Teile der gesamten Mechanik des Scharniers 10 zusammen und sichert mittels Ausprägungen 66 die einzelnen Bauteile. Es ist denkbar, dass das Gehäuse 62 aus Kunststoff ausgebildet ist, und dass der Deckel 64 form-, kraft- oder stoffschlüssig mit dem Gehäuse 62 verbunden ist. Die Einstellschraube 50 und die Anschlagschraube 56 sind mittels Öffnungen im Gehäuse 62 erreichbar. Die kompakte Bauform des Scharniers 10 gewährleistet, dass es in die Seitenwand zwischen zwei Gepäckboxen platzierbar ist, wobei der Hohlzylinder 36 sich horizontal im Bereich der Deckenplatte der Gepäckbox befindet. Er kann entweder innerhalb oder oberhalb der Deckenplatte integriert sein.

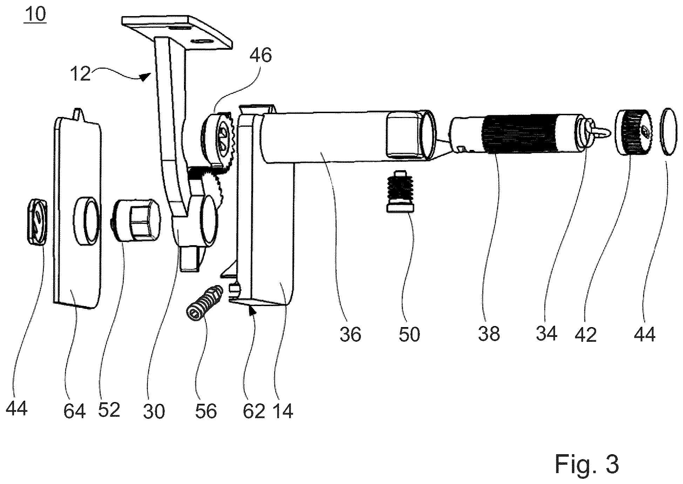

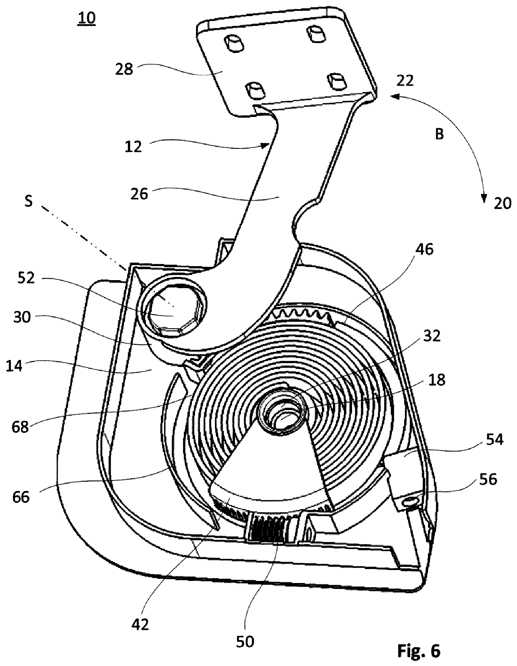

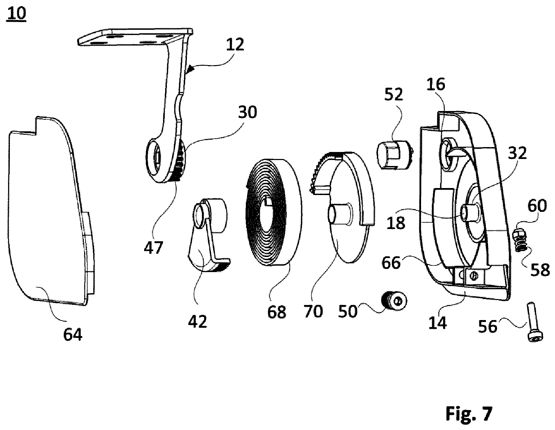

Die in Fig. 6 und Fig. 7 dargestellte zweite Ausführungsform nach der Erfindung entspricht im Wesentlichen der ersten Ausführungsform gemäß Fig. 2 und Fig. 3. Im Vergleich zur ersten Ausführungsform ist das Federelement 34 als eine Flach-Spiralfeder 68 ausgebildet. Sie ist gemeinsam mit einem als Treibrad 70 ausgebildeten Bauteil 46 am zweiten Lager 18 angeordnet. Das Treibrad 70 ist in einem Bereich als Zahnrad ausgebildet und ist lose am zweiten Lager 18 gelagert, wobei das radial äußere Ende der Flach-Spiralfeder 68 im Treibrad 70 gesichert ist. Eine Drehmomentverstellung 42 ist an der Flach-Spiralfeder 68 angeordnet und das radial innere Ende der Flach-Spiralfeder 68 ist mit der Drehmomentverstellung 42 verbunden, beispielsweise in einer Nut. Das am ersten Lager 16 angeordnete schwenkbare Scharnierteil 12 ist als eine Lagerbuchse 30 mit Verzahnungen 47 ausgebildet. Die Verzahnungen 47 greifen formschlüssig in den als Zahnrad ausgebildeten Bereich des Treibrads 70. Mit Hilfe der Position der Verzahnungen 47 der Lagerbuchse 30 auf dem Zahnrad des Treibrads 70 und durch Drehen der Drehmomentverstellung 42 mittels einer Einstellschraube 50, deren Welle in den verzahnten Bereich der Drehmomentverstellung 42 eingreift, ist die Flach-Spiralfeder 68 auf das benötigte Drehmoment vorspannbar. Vorliegend wirkt die Flach-Spiralfeder 68 im Uhrzeigersinn auf das Treibrad 70, das den Scharnierarm 26 gegen den Uhrzeigersinn in die geöffnete Position 22 bringt.

### Bezugszeichenliste

- 10: Scharnier
- 12: schwenkbares Scharnierteil
- 14: feststehendes Scharnierteil
- 16: erstes Lager
- 18: zweites Lager
- 20: geschlossene Position
- 22: geöffnete Position
- 24: Klappe
- 26: Scharnierarm
- 28: Scharnierblatt
- 30: Lagerbuchse
- 32: Lagerzapfen
- 34: spannbares Federelement
- 36: Hohlzylinder
- 38: Achsrohr
- 40: Torsions-Spiralfeder
- 42: Drehmomentverstellung
- 44: Deckel
- 46: Bauteil mit Zahnrad
- 47: Verzahnungen
- 48: Schneckengetriebe
- 50: Einstellschraube
- 52: Dämpfer
- 54: Anschlag
- 56: Anschlagschraube
- 58: Feder
- 60: Mutter
- 62: Gehäuse
- 64: Deckel des Gehäuses
- 66: Ausprägungen
- 68: Flach-Spiralfeder
- 70: Treibrad
- S: Schwenkachse
- B: Öffnungsbewegung

## Patentansprüche

1. Scharnier (10) umfassend ein schwenkbares Scharnierteil (12), ein feststehendes Scharnierteil (14) sowie ein spannbares Federelement (34), wobei das feststehende Scharnierteil (14) mit einem ersten Lager (16) sowie einem zweiten Lager (18) ausgebildet ist, wobei die Lager (16, 18) zueinander versetzte Schwenkachsen (S₁, S₂) aufweisen, wobei das schwenkbare Scharnierteil (12) über das erste Lager (16) am feststehenden Scharnierteil (14) um eine Schwenkachse (S₁) schwenkbar gelagert ist, das spannbare Federelement (34) über das zweite Lager (18) am feststehenden Scharnierteil (14) angeordnet ist und das spannbare Federelement (34) als eine Spiralfeder (68) ausgebildet ist, wobei die Spiralfeder (68) gemeinsam mit einem als Treibrad (70) ausgebildeten Bauteil (46) lose am zweiten Lager (18)
angeordnet ist, wobei das Treibrad (70) in einem Bereich als Zahnrad ausgebildet und am zweiten Lager (18) gelagert ist, wobei das radial äußere Ende der Spiralfeder (68) im Treibrad (70)
gesichert ist, wobei das am ersten Lager (16) angeordnete schwenkbare Scharnierteil (12) als Lagerbuchse (30) mit Verzahnungen (47) ausgebildet ist, die formschlüssig mit einem Lagerzapfen (32) am
ersten Lager (16) verbunden ist, wobei die Verzahnungen (47) formschlüssig in den als Zahnrad
ausgebildeten Bereich des Treibrads (70) greifen, **dadurch gekennzeichnet, dass** die Spiralfeder (68) als Flach-Spiralfeder ausgebildet ist, und dass das radial äußere Ende der Spiralfeder mit dem Treibrad (70) verbunden ist, dass eine Drehmomentverstellung (42) am radial inneren Ende der Spiralfeder (68) mit dieser verbunden ist, wobei die Drehmomentverstellung (42) einen verzahnten Bereich aufweist, in den eine Einstellschraube (50) eingreift, und wobei mit Hilfe der Position der Verzahnungen (47) der Lagerbuchse (30) auf dem als Zahnrad ausgebildeten Bereich des Treibrads (70) und durch Drehen der Einstellschraube (50) der Drehmomentverstellung (42), die Spiralfeder (68) auf das benötigte Drehmoment vorspannbar ist.

2. Scharnier nach Anspruch 1, **dadurch gekennzeichnet, dass** an einer Scharnierachse (S1, S2) ein Dämpfer (52) angeordnet ist, der insbesondere formschlüssig in der Lagerbuchse (30) des schwenkbaren Scharnierteils (12) gelagert ist.

3. Scharnier nach Anspruch 1 oder 2, **dadurch gekennzeichnet, dass** das feststehende Scharnierteil (14) mit einem einstellbaren Anschlag (54) ausgebildet ist.

4. Scharnier nach einem der vorangehenden Ansprüche, **dadurch gekennzeichnet, dass** das feststehende Scharnierteil (14) zu einem Gehäuse (62) ausgebildet ist.

5. Scharnier nach Anspruch 4, **dadurch gekennzeichnet, dass** das spannbare Federelement (34), die mechanische Kraftübertragung zwischen den Scharnierteilen (12, 14), der einstellbare Anschlag (54) sowie die einstellbare Drehmomentverstellung (42) im Gehäuse (62) angeordnet sind.

6. Scharnier nach einem der vorangehenden Ansprüche, **dadurch gekennzeichnet, dass** das schwenkbare Scharnierteil (12) gegen den Uhrzeigersinn belastet ist, wenn die Flach-Spiralfeder im Uhrzeigersinn auf das Treibrad (70) wirkt.

## Claims

1. Hinge (10) comprising a pivotable hinge part (12), a stationary hinge part (14), and a tensionable spring element (34), which stationary hinge part (14) is designed to be provided with a first bearing (16) and a second bearing (18), which bearings (16, 18) have pivot axes (S₁, S₂) that are offset relative to each other, wherein the pivotable hinge part (12) is mounted in the first bearing (16) on the stationary hinge part (14) such that it can pivot about a pivot axis (S₁), the tensionable spring element (34) is arranged on the stationary hinge part (14) via the second bearing (18), and the tensionable spring element (34) is designed as a coil spring (68), which coil spring (68) is arranged loosely on the second bearing (18) together with a component (46) in the form of a driving wheel (70), with one area of the driving wheel (70) being designed as a gear wheel and being mounted on the second bearing (18), with the radially outer end of the coil spring (68) being secured in the driving wheel (70), with the pivotable hinge part (12) arranged on the first bearing (16) being designed as a bearing bush (30) having gear teeth (47) thereon, which are positively connected to a bearing journal (32) on the first bearing (16), which gear teeth (47) engage positively in the gear-shaped area of the driving wheel (70), **characterized in that** the coil spring (68) is designed as a flat coil spring, and that the radially outer end of the coil spring is connected to the driving wheel (70), that a torque control (42) at the radially inner end of the coil spring (68) is connected to it, that the torque control (42) has a toothed area in which an adjusting screw (50) engages, and that is possible to preload the coil spring (68) to the required torque with the aid of the position of the gear teeth (47) of the bearing bush (30) on the gear-shaped area of the driving wheel (70) and by turning the adjusting screw (50) of the torque control (42).

2. Hinge according to claim 1, **characterized in that** a damper (52) is arranged on a hinge axis (S1, S2), which damper is mounted in particular so as to lock positively in the bearing bush (30) of the pivotable hinge part (12).

3. Hinge according to claim 1 or 2, **characterized in that** the stationary hinge part (14) is designed to be provided with an adjustable stop (54).

4. Hinge according to any one of the preceding claims, **characterized in that** the stationary hinge part (14) is designed as a housing (62).

5. Hinge according to claim 4, **characterized in that** the tensionable spring element (34), the mechanical power transmission between the hinge parts (12, 14), the adjustable stop (54) and the adjustable torque control (42) are all arranged in the housing (62).

6. Hinge according to any one of the preceding claims, **characterized in that** the pivotable hinge part (12) will be loaded counterclockwise when the flat coil spring acts clockwise on the driving wheel (70).

## Revendications

1. Charnière (10) comprenant une pièce de charnière pivotante (12), une pièce de charnière fixe (14) ainsi qu'un élément de ressort pouvant être tendu (34), dans laquelle la pièce de charnière fixe (14) est conçue avec un premier palier (16) ainsi qu'un second palier (18), dans laquelle les paliers (16, 18) présentent des axes de pivotement (S₁, S₂) décalés l'un par rapport à l'autre, dans laquelle la pièce de charnière pivotante (12) est montée en pivotement autour d'un axe de pivotement (S₁) au niveau de la pièce de charnière fixe (14) via le premier palier (16), l'élément de ressort pouvant être tendu (34) est agencé au niveau de la pièce de charnière fixe (14) via le second palier (18) et l'élément de ressort pouvant être tendu (34) est conçu en tant que ressort spiral (68), dans laquelle le ressort spiral (68) ensemble avec un composant (46) conçu en tant que roue d'entraînement (70) est agencé de façon lâche au niveau du second palier (18), dans laquelle la roue d'entraînement (70) est conçue dans une région en tant que roue dentée et est montée au niveau du second palier (18), dans laquelle l'extrémité radialement extérieure du ressort spiral (68) est sécurisée dans la roue d'entraînement (70), dans laquelle la pièce de charnière pivotante (12) agencée au niveau du premier palier (16) est conçue en tant que douille de palier (30) avec des dentures (47), laquelle est reliée par coopération de forme avec un tourillon (32) au niveau du premier palier (16), dans laquelle les dentures (47) sont en prise par coopération de forme dans la région, conçue en tant que roue dentée, de la roue d'entraînement (70), **caractérisée en ce que** le ressort spiral (68) est conçu en tant que ressort spiral plat, et **en ce que** l'extrémité radialement extérieure du ressort spiral est reliée avec la roue d'entraînement (70), **en ce qu'**un réglage de couple (42) est relié avec le ressort spiral (68) au niveau de l'extrémité radialement intérieure de celui-ci, dans laquelle le réglage de couple (42) présente une région endentée où une vis de réglage (50) vient en prise, et dans laquelle, à l'aide de la position des dentures (47) de la douille de palier (30) sur la région, conçue en tant que roue dentée, de la roue d'entraînement (70), et par rotation de la vis de réglage (50) du réglage de couple (42), le ressort spiral (68) peut être précontraint sur le couple nécessaire.

2. Charnière selon la revendication 1, **caractérisée en ce qu'**au niveau d'un axe de charnière (S1, S2) est agencé un amortisseur (52) qui est en particulier monté par coopération de forme dans la douille de palier (30) de la pièce de charnière pivotante (12).

3. Charnière selon la revendication 1 ou 2, **caractérisée en ce que** la pièce de charnière fixe (14) est conçue avec une butée réglable (54).

4. Charnière selon l'une des revendications précédentes, **caractérisée en ce que** la pièce de charnière fixe (14) est conçue de façon à former un logement (62).

5. Charnière selon la revendication 4, **caractérisée en ce que** l'élément de ressort pouvant être tendu (34), la transmission de force mécanique entre les pièces de charnière (12, 14) de la butée réglable (54) ainsi que le réglage de couple (42) pouvant être réglé sont agencés dans le logement (62).

6. Charnière selon l'une des revendications précédentes, **caractérisée en ce que** la pièce de charnière pivotante (12) est sollicitée dans le sens antihoraire lorsque le ressort spiral plat agit sur la roue d'entraînement (70) dans le sens horaire.
